# EUROPÄISCHE PATENTSCHRIFT

(11) **EP 2 072 764 B1**
(45) Veröffentlichungstag und Bekanntmachung des Hinweises auf die Patenterteilung: **30.03.2016**
(21) Anmeldenummer: 08170223.5
(22) Anmeldetag: 28.11.2008
(51) Int. Cl.: F01D 25/16, F16C 17/04, F16C 33/10, F16C 33/14, F16C 43/02

(54) **Axiallager**
Axial bearing
Palier axial

(30) Priorität: 14.12.2007 DE 102007060226
(43) Veröffentlichungstag der Anmeldung: 24.06.2009
(73) Patentinhaber: Bosch Mahle Turbo Systems GmbH & Co. KG, 70376 Stuttgart (DE)
(72) Erfinder: Fleig, Claus, 71679, Asperg (DE); Rauscher, Martin, 71636, Ludwigsburg (DE); Wengert, Andreas, 71549, Auenwald (DE); Winkler, Gunter, 70176, Stuttgart (DE)
(74) Vertreter: BRP Renaud & Partner mbB Rechtsanwälte Patentanwälte Steuerberater

(56) Entgegenhaltungen:
- EP-A1- 1 619 356
- DE-T2- 69 109 498
- DE-T2- 69 727 835
- US-A1- 2006 274 982
- US-B1- 6 669 372

## Beschreibung

### Stand der Technik

Aus EP 0 160 460 A2 ist eine Aufladeeinrichtung, die als Abgasturbolader ausgestaltet ist, bekannt. Der Abgasturbolader umfasst ein Turbinengehäuse mit einem Kanal, über den Abgas von einer Verbrennungskraftmaschine durch eine ringförmige Passage zur Turbine geleitet wird und einen Düsenring, eine Anzahl von Schaufeln, die in dem ringförmigen Kanal angeordnet sind und auf dem Düsenring verdrehbar gelagert sind sowie eine Einrichtung zur Verdrehung der Schaufeln. Wie aus EP 0 160 460 A2 hervorgeht, verläuft zwischen dem Turbinenlaufrad des Turbinenteiles und dem Verdichterlaufrad des Verdichterteiles des Abgasturboladers eine Welle. Diese durchgehende Welle ist im Gehäuse des Abgasturboladers in einem Axiallager gelagert. Ein Schmiermedium, wie z.B. gefiltertes Motoröl, wird über einen Anschluss einem Bohrungssystem zugeführt. Das Bohrungssystem erstreckt sich bis zu den Lagern der Welle, an der das Turbinenlaufrad und das Verdichterlaufrad aufgenommen sind. In der aus EP 0 160 460 A2 bekannten Lösung sind die Gleitlager über Kanäle mit einer Ölversorgungsbohrung verbunden. Die sich im Wesentlichen in horizontaler Richtung durch das Gehäuse der Aufladeeinrichtung erstreckende Ölversorgungsbohrung wird ihrerseits über einen Anschlussstutzen mit dem Schmiermedium beaufschlagt.

In anderen Lösungen als der oben kurz skizzierten Lösung gemäß EP 0 160 460 A2 werden zur Versorgung der Funktionsflächen von Axiallagern in Aufladeeinrichtungen insbesondere bei Abgasturboladern relativ lange dünne Bohrungen gefertigt. Die sich durch das dickwandige Gehäuse erstreckenden Bohrungen sind hinsichtlich des Fertigungsprozesses sehr teuer. Des Weiteren sind Funktionsflächen auf beiden Seiten des Axiallagers anzubringen. Die Funktionsflächen, die üblicherweise als Keilflächen aufgebracht sind und an denen die Tragkraft des Axiallagers erzeugt wird, sind hinsichtlich ihrer Fertigung ebenfalls teuer und darüber hinaus außerordentlich präzise zu tolerieren.

Ein gattungsgemäßes Axiallager ist aus der DE 691 09 498 T2 bekannt. Es ist über einen Anschluss mit einem Schmiermittel beaufschlagt, das schmiermittelbeaufschlagte Flächen des Axiallagers versorgt, wobei das Axiallager in axial geteilter Schalenausführung ausgeführt ist, derart, dass eine erste und eine zweite Axiallagerschale zusammen das Axiallager bilden, wobei das Axiallager eine erste sowie eine zweite Außenseite aufweist, und wobei an mindestens einer Axiallagerschale innenliegend mindestens ein Schmiermittelkanal verläuft. Beim bekannten Axiallager ist die eine Außenseite gemeinsam durch einen Abschnitt der einen Lagerschale und einen Abschnitt der anderen Lagerschale gebildet.

Aus der US 6 669 372 B1 ist ein weiteres gattungsgemäßes Axiallager bekannt, bei dem jede Lagerschale eine 90°-Aussparung und diametral gegenüberliegend eine 90°-Aufdickung aufweist. Beim Zusammenfügen der beiden Lagerschalen greift die jeweilige 90°-Aufdickung der einen Lagerschale in die zugehörige 90°-Aussparung der anderen Lagerschale ein. Somit werden bei diesem bekannten Axiallager beide Außenseiten jeweils zum Teil von der einen Lagerschale und im Übrigen von der anderen Lagerschale gebildet.

### Darstellung der Erfindung

Erfindungsgemäß wird vorgeschlagen, das Axiallager der Aufladeeinrichtung zu teilen und als zwei ähnliche Bauteile, nämlich als eine erste Axiallagerschale und eine zweite Axiallagerschale darzustellen und auf diese Weise die Fertigungskosten für das Axiallager zu senken. Ferner ist erfindungsgemäß vorgesehen, die gesamte erste Außenseite des Axiallagers von einer von der zweiten Axiallagerschale abgewandten Seite der ersten Axiallagerschale zu bilden und die gesamte zweite Außenseite des Axiallagers von einer von der ersten Axiallagerschale abgewandten Seite der zweiten Axiallagerschale zu bilden. Bei der Teilung des Axiallagers in zwei ähnliche Bauteile sind an diesen die Funktionsflächen, wie z.B. Keilflächen zur Erzeugung der Tragkraft und Rastflächen in jeweils entgegengesetzter Orientierung darzustellen. In vorteilhafter Weise kann der jeweilige Rohling der beiden Komponenten des Axiallagers identisch sein, und nur die Endbearbeitung der beiden das Axiallager darstellenden Bauteile unterscheidet sich.

Der erfindungsgemäß vorgeschlagenen Lösung folgend können lange und dünne Schmiermittelversorgungsbohrungen und damit einhergehende aufwändige Fertigungsschritte entfallen. Durch eine Klassierung der beiden das Axiallager bildenden schalenförmigen Bauteile kann die Gesamtdicke des Axiallagers sehr genau eingestellt werden, ohne dass die Einzelteile entsprechend genau gefertigt sein müssen. Daraus ergibt sich eine erhebliche Reduktion der Fertigungskosten für das bei schnell laufenden Aufladeeinrichtungen wie z.B. Abgasturbolader erforderliche Axiallager, was großen Temperaturdifferenzen standhalten muss. Der erfindungsgemäß vorgeschlagenen Lösung folgend, wird anstatt der Herstellung einer Schmiermittelversorgung von einem radial weiter außen liegenden Versorgungskanal an die Keilflächen durch eine schräge radial nach innen führende Bohrung darzustellen, in mindestens einem von zwei schalenförmigen Körpern auf der Rückseite der Keilflächen aufweisenden Seite Schmiermittelkanäle eingeprägt oder eingestanzt. Anstelle des Einprägens können die Schmiermittelkanäle auch gestanzt oder anderweitig auf einander zuweisenden Rückseiten des geteilt ausgebildeten Axiallagers ausgebildet werden. Ein zentraler Schmiermittelkanal hat z.B. eine nierenförmige Kontur. Von diesem zentralen, nierenförmig ausgeführten Schmiermittelkanals zweigen eine Anzahl von Stichkanälen ab, über die einzelne Austrittsöffnungen, die in die Keilflächen münden, mit Schmiermittel versorgt werden. Über einen z.B. mittig angeordneten zentralen Schmiermittelzulauf kann der zentrale nierenförmige Schmiermittelkanal mit dem Schmiermittel beaufschlagt werden. Durch Einprägen bzw. Einstanzen in zumindest eine der Rückseiten der beiden schalenförmigen Axiallagerschalen des geteilten Axiallagers kann insbesondere eine im Verhältnis zu ihrem Durchmesser lang im Material eines als Anlaufring ausgebildeten Axiallagers verlaufende Bohrung eingespart werden, ohne dass die Schmiermittelversorgung, insbesondere der als Keilflächen ausgebildeten Funktionsflächen auf mindestens einer Vorderseite des Axiallagers gefährdet würde. In fertigungstechnischer Hinsicht kann die erfindungsgemäß vorgeschlagene Lösung in der Serienfertigung aufgrund der Verwendung bewährter Verfahren sehr rationell gefertigt werden.

### Kurze Beschreibung der Zeichnungen

Anhand der Zeichnungen wird die Erfindung nachstehend eingehender beschrieben.

Es zeigen:
- Figur 1: einen Schnitt durch einen Wellenlagerung einer Welle in einer als Abgasturbolader beschaffenen Aufladeeinrichtung,
- Figur 2: eine Ansicht eines einteilig ausgebildeten Axiallagers,
- Figur 3: einen Schnitt durch ein einstückig ausgebildetes Axiallagers mit schrägverlaufender Ölversorgungsbohrung,
- Figur 4: die Rückseite des einteilig ausgebildeten Axiallagers gemäß der Darstellung in Figur 3,
- Figur 5: die Vorderseite einer ersten Axiallagerschale eines geteilten Axiallagers, gemäß der vorliegenden Erfindung,
- Figur 6: die Rückseite der ersten Axiallagerschale gemäß Figur 5,
- Figur 7: die Außenseite der zweiten Axiallagerschale des geteilt ausgebildeten Axiallagers, gemäß der vorliegenden Erfindung,
- Figur 8: die Rückseite der zweiten Axiallagerschale gemäß Figur 7 und
- Figuren 9 und 10: die beiden an ihren jeweiligen Rückseiten miteinander zu verfügenden Axiallagerschalen, gemäß der vorliegenden Erfindung.

### Ausführungsformen

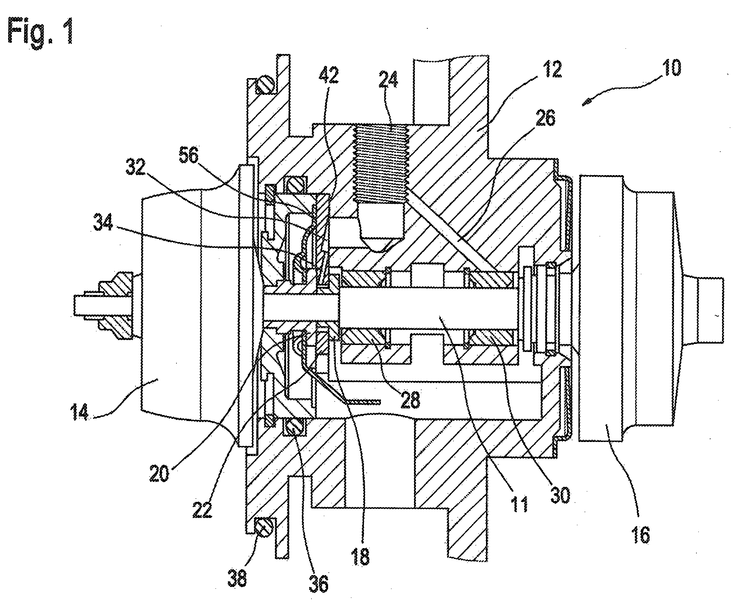

Der Darstellung gemäß Figur 1 ist ein Schnitt durch eine Wellenlagerung einer als Abgasturbolader ausgebildeten Aufladeeinrichtung 10 zu entnehmen.

Aus der Schnittdarstellung gemäß Figur 1 geht hervor, dass innerhalb eines Gehäuseteils 12 der Aufladeeinrichtung 10 eine Welle 11 verläuft, die über Buchsen 28, 30 im Gehäuseteil 12 der Aufladeeinrichtung 10 drehbar gelagert ist. Die Welle 11, über welche ein Verdichterlaufrad 14 von einem Turbinenlaufrad 16 angetrieben wird, ist über ein als geschlossen gestaltetes Axiallager im Gehäuseteil 12 der Aufladeeinrichtung 10 gelagert. Die Welle 11 wird in der Ausführungsform gemäß Figur 1 mittels der zwei in axiale Richtung von einander beabstandeten Buchsen 28, 30 im Gehäuseteil 12 gelagert. Mit Bezugszeichen 18 ist eine 1., mit Bezugszeichen 20 eine 2. Anlaufschulter bezeichnet.

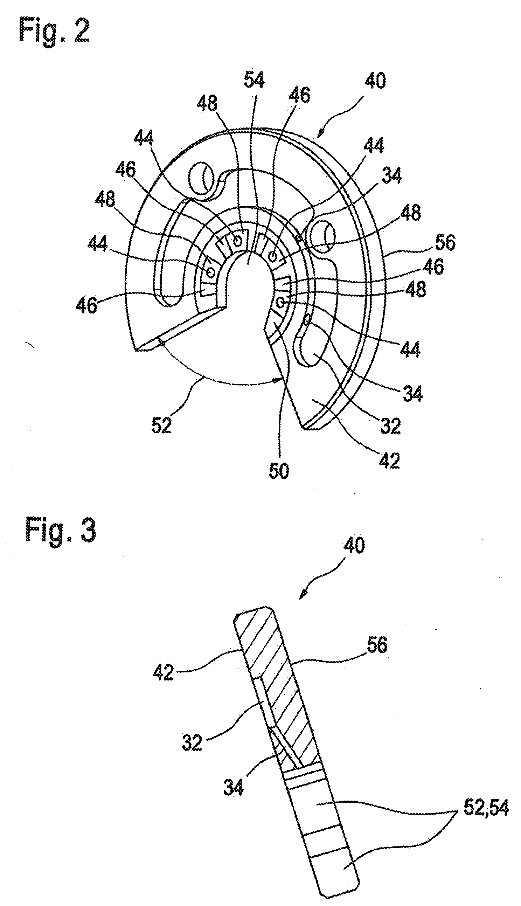

Aus der Darstellung gemäß Figur 1 geht hervor, dass das geschlossene Axiallager 22 im Gehäuseteil 12 der Aufladeeinrichtung 10 angeordnet ist. Wie aus Figur 1 weiter entnommen werden kann, befindet sich im Gehäuseteil 12 der Aufladeeinrichtung 10 ein Anschluss 24 für eine Schmiermittelversorgung sowie eine Schmiermittelbohrung 26. Über den Anschluss 24 tritt das Schmiermittel in die durch das Gehäuseteil 12 verlaufende Schmiermittelbohrüng 26 ein und wird an die Buchsen 28, 30, welche die Welle 11 im Gehäuseteil 12 radial lagern, geleitet sowie in das geschlossen gestaltete Axiallager 22. Das Axiallager 22 weist mindestens an einer Stirnseite eine Anzahl von Funktionsflächen auf. Diese umfassen (vgl. Darstellung gemäß Figur 2) Rastflächen 46, Keilflächen 48 und in diese mündende Austrittsbohrungen 44 für das Schmiermittel. Die Funktionsflächen nehmen das über den Anschluss 24 bzw. die in der Darstellung gemäß Figur 1 gezeigte Schmiermittelbohrung 26 das Schmiermittel zum Aufbau der Tragkraft in axiale Richtung auf. Durch diese Variante einer Gleitlagerung der Welle 11, an der sowohl das Verdichterlaufrad 14 und das Turbinenlaufrad 16 aufgenommen sind, ist eine reibungsarme, kostengünstige höheren Temperaturen widerstehende Lagerung der Welle 11 einer Aufladeeinrichtung 10 kostengünstig realisierbar.

Bei der Ausführungsform gemäß Figur 1 ist beim Axiallager 22 eine vertikal verlaufende Zuführbohrung 34 sehr aufwändig herzustellen, da deren Bohrüngslänge den Bohrungsdurchmesser um ein Vielfaches übersteigt.

Figur 2 ist eine perspektivische Ansicht der Vorderseite des Axiallagers 22 zu entnehmen.

Aus der perspektivischen Draufsicht auf die Vorderseite des Axiallagers 40 geht hervor, dass das Axiallager 22 an seiner Vorderseite 42 eine Anzahl von ringförmig angeordneten Rastflächen 46 und Keilflächen 48 aufweist. Die in Ringform an der Vorderseite 42 des Axiallagers 40 gemäß der perspektivischen Darstellung in Figur 2 verteilt angeordneten Flächen 46, 48 werden über jeweils eine Austrittsbohrung 44 mit Schmiermittel versorgt. Aufgrund der Anordnung von Rastflächen 46 und Keilflächen 48 erfolgt durch Zufuhr des Schmiermittels der Aufbau eines Schmiermittelpolsters oder eines Schmiermittelfilms, der einen Materialkontakt zwischen dem Axiallager 40 und den in Figur 1 dargestellten Anlaufschultern 18, 20 vermeidet, so dass eine reibungsarme Axiallagerung geschaffen wird. Aus der Darstellung gemäß Figur 2 geht hervor, dass das Axiallager 40 unterhalb einer Durchgangsöffnung 56 eine 90° Aussparung 52 aufweist. Aufgrund dieser Aussparung 52 unterhalb der Durchgangsöffnung 54 kann ein einteilig ausgebildetes Axiallager 40 im Gegensatz zu einem geschlossenen Axiallager 22, wie in Figur 1 dargestellt, sehr einfach auf die Welle 11 aufgesteckt werden, was eine einfachere Montage zur Folge hat. An der Vorderseite 42 erstreckt sich ein nierenförmig ausgeführter Schmiernittelverteilungskanal 32. Von diesem strömt das Schmiermittel über die mindestens eine Zuführbohrung 34, die sich im Wesentlichen in vertikale Richtung im Vollmaterial des Axiallagers 40 erstreckt, Axialbohrungen 42, die in den Keilflächen 48 liegen, zu.

In Zusammenhang mit Figur 1 ist zu erwähnen, dass das dort eingesetzte Axiallager 22 in geschlossene Bauform ausgebildet ist und zwischen einer ersten Anlaufschülter 18 (Spurscheibe) und einer zweiten Anlaufschulter 20 (Spurscheibe) liegt. Durch die in Figur 1 dargestellte Bohrung mittels des einteilig ausgebildeten Axiallagers 22 in geschlossener Ausführung können Kräfte in beide Richtungen, die auf die Welle 11 einwirken, aufgenommen werden, ebenso wie bei offener Ausführung des Axiallagers.

Der Darstellung in Figur 3, die einen Schnitt durch das in Figur 2 perspektivisch dargestellte Axiallager 22 wiedergibt, lässt sich entnehmen, dass durch das Vollmaterial des einteilig ausgebildeten Axiallagers die Zuführbohrung 34 verläuft. Diese verläuft im Vollmaterial des Axiallagers 40 und stellt die Schmiermittelzufuhr des Axiallagers 30 sicher. In fertigungstechnischer Hinsicht ist die Zuführbohrung 34 im Vollmaterial des Axiallagers 30 sehr aufwändig und schwierig herzustellen.

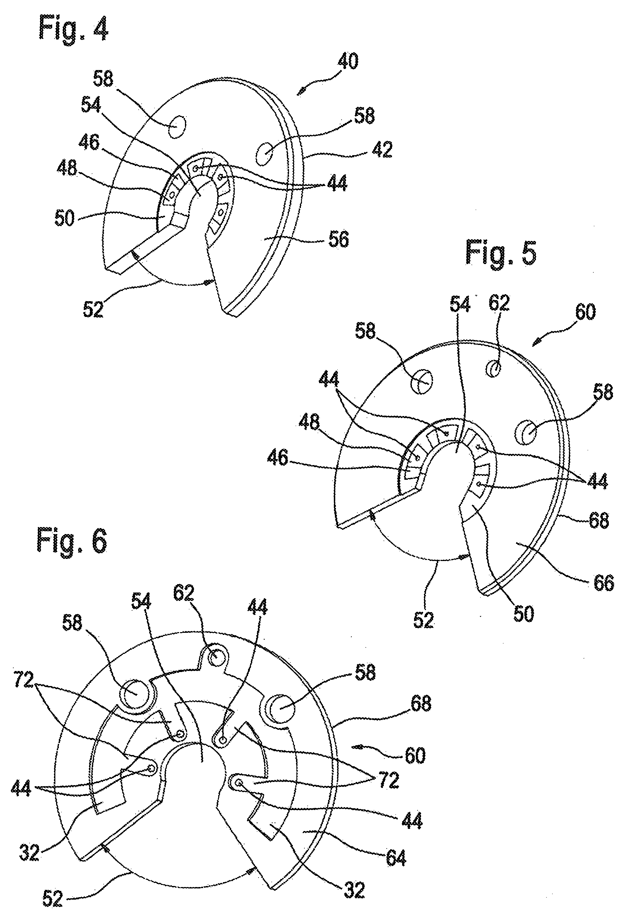

Der Darstellungen gemäß Figur 4 ist die Rückseite des einteiligen Axiallagers zu entnehmen.

Auf der Rückseite 56 befindet sich ebenfalls eine Schmiernut 50. Analog zur Darstellung gemäß Figur 2 für die Vorderseite des mit einer Ausnehmung 52 versehenen Axiallagers 40, verläuft auf der Rückseite 56 gemäß der Darstellung in Figur 4 am ungeteilten Axiallager 40 ebenfalls eine Schmiernut 50. Innerhalb der Schmiernut liegen in Umfangsrichtung hintereinander angeordnet die Keilflächen 48, in die jeweils eine Austrittsöffnung 44 für das Schmiermittel mündet sowie die Rastflächen 46. Am einteilig ausgebildeten Axiallager 40 gemäß der Darstellung in Figur 4 sind des Weiteren, wie in der perspektivischen Ansicht gemäß Figur 2 bereits angedeutet, Durchgangsöffnungen (Schraublöcher 58) ausgeführt. Aufgrund des Umstandes, dass sowohl auf der Vorderseite 42 als auch auf der Rückseite 56 des einteilig ausgebildeten Axiallagers 40 Schmiernuten 50 mit darin angeordneten Keilflächen 48 bzw. Rastflächen 46 verlaufen, kann ein Schmiermittelpolster sowohl zur Aufnahme von Axialkräften sowohl an der Rückseite 56 als auch an der Vorderseite 42 bei Beaufschlagung des einteilig ausgebildeten Axiallagers 40 mit einem Schmiermittel, aufgebaut werden.

Figur 5 zeigt eine Vorderseite eines schalenformigen mehrteilig ausgebildeten Axiallagers.

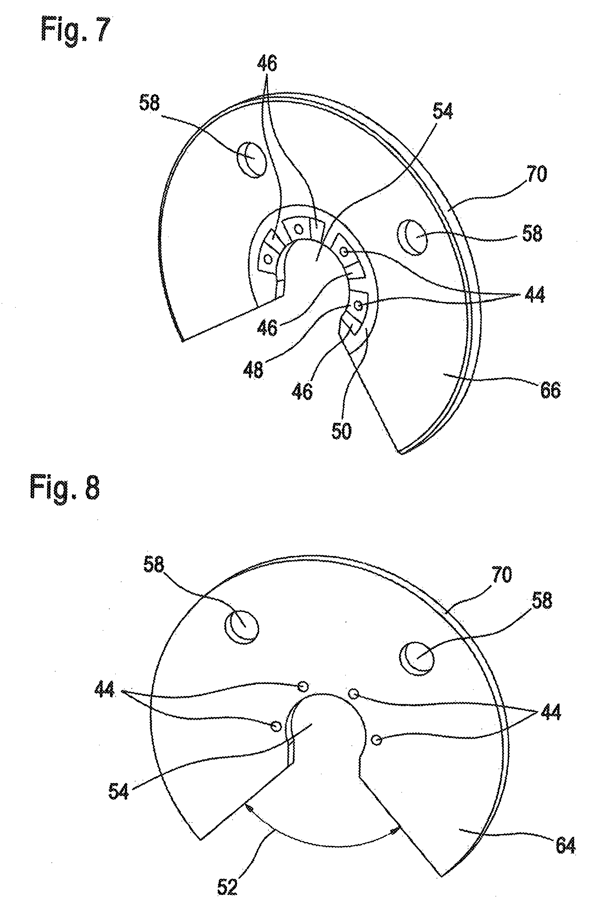

Figur 5 zeigt die perspektivische Ansicht einer Außenseite 66 einer ersten Axiallagerschale 68 einer geteilten Ausführung 60 eines Axiallagers. Die geteilte Ausführung 60 des Axiallagers umfasst im Wesentlichen die in Figur 5 in perspektivischer Ansicht dargestellte erste Axiallagerschale 68 und eine weitere in den Figuren 7 und 8 von Vorder- und Rückseite her dargestellte weitere zweite Axiallagerschale 70.

Wie der Darstellung gemäß Figur 5 zu entnehmen ist, weist die Außenseite 66 der ersten Axiallagerschale 68 neben den Schraublöchern 58 und einer Durchgangsbohrung 62 zum Anschluss einer Schmiermittelversorgung die Schmiernut 50 auf. Innerhalb der Schmiernut sind in Umfangsrichtung aufeinanderfolgend Keilflächen 48 und Rastflächen 46 angeordnet. Das über die Durchgangsbohrung 62 zugeführte Schmiermittel tritt über Austrittsbohrungen 44, die im Bereich der Keilflächen 48 liegen, aus und ermöglicht den Aufbau eines Schmiermittelpolsters bzw. Schmiermittelfilms innerhalb der Schmiernut 50. Wie aus der Darstellung gemäß Figur 5 hervorgeht, umfasst auch die erste Axiallagerschale 68 des in geteilter Ausführung 60 ausgebildeten Axiallagers eine Öffnung 54 für die Welle 11 (vgl. Darstellung gemäß Figur 1), die an der Unterseite in eine Aussparung 52 übergeht.

sprechend weist auch die in den Figuren 7 und 8 dargestellte zweite Axiallagerschale 70 die Aussparung 52 zur Erleichterung der Montage auf.

Figur 6 ist die Rückseite der ersten Axiallagerschale 68 gemäß Figur 5 zu entnehmen.

Aus der Darstellung gemäß Figur 6 lässt sich entnehmen, dass in einer Innenseite 64 der ersten Axiallagerschale 68 der nierenförmige ausgebildete Schmiermittelverteilungskanal 32 verläuft. Dieser wird im Wege einer erheblich vereinfachten Herstellung des in der geteilten Ausführung 60 ausgebildeten Axiallagers in die Innenseite 64, d.h. die Rückseite der ersten Axiallagerschale 68, eingeprägt, eingestanzt oder geschmiedet. Wie der Ansicht der Innenseite 64 zu entnehmen ist, mündet die Durchgangsbohrung 62 in den nierenförmig an der Innenseite 64 ausgebildeten zentralen Schmiermittelverteilungskanal 32. Wie der Darstellung der Figur 6 des Weiteren entnommen werden kann, zweigen von dem ca. 180°-270° überstreichenden nierenförmigen Schmiermittelkanal 32 Stichkanäle 72 ab. Die Stichkanäle 72 verlaufen im Wesentlichen in radiale Richtung bezogen auf die Symmetrieachse der ersten Axiallagerschale 68 und ermöglichen eine Versorgung der Austrittsbohrung 44 mit Schmiermittel, welches über die Durchgangsbohrung 62 zugeführt wird. Wie Figur 6 des Weiteren zeigt, verläuft unterhalb der Öffnung 54 für die Welle 11 die Aussparung 52, die in der Darstellung gemäß Figur 6 und analog auch in den Darstellungen gemäß den Figuren 5, 7, 8 , 9 und 10 einen Winkel in der Größenordnung von ca. 90° überstreicht. Der perspektivischen Ansicht gemäß Figur 6 ist des Weiteren zu entnehmen, dass der nierenförmig verlaufende Schmiermittelkanal 32 durch Materialstege, welche die Schraublöcher 58 begrenzen, verengt ist. Der Versorgung der Stichkanäle 72 über den im Wesentlichen nierenförmig ausgebildeten Schmiermittelverteilungskanal 32 tut dies jedoch keinen Abbruch.

Durch die erste Axiallagerschale 68 wird die Funktion der in Figur 2 dargestellten Vorderseite des einteilig ausgebildeten Axiallagers abgebildet, mit dem Unterschied, dass in der Darstellung gemäß Figur 2 die Schmiermittelzufuhr von der Außenseite her erfolgt.

Figur 7 zeigt die Außenseite der zweiten Axiallagerschale des geteilt ausgebildeten Axiallagers.

Die Konfiguration der Außenseite 66 der zweiten Axiallagerschale 70 gemäß der perspektivischen Ansicht in Figur 7 entspricht im Wesentlichen der Konfiguration der Außenseite 66, der ersten Axiallagerschale 68 geteilten Ausführung 60 des Axiallagers, abgesehen von der in Figur 7 fehlenden Durchgangsbohrung 62, über welche im Innenraum, d.h. dem an der Rückseite der ersten Axiallagerschale 68 ausgebildeten nierenförmigen Schmiermittelverteilungskanals, eben jenes Schmiermittel zugeführt wird. Aus der perspektivisch wiedergegebenen Ansicht der Außenseite 66 der zweiten Axiallagerschale 70 geht hervor, dass auch hier innerhalb einer Schmiernut 50 Rastflächen 46 und Keilflächen 48 in alternierender Reihenfolge aufeinander ausgeführt sind, wobei analog zu den Darstellungen gemäß Figur 5 in die Keilflächen 48 Austrittsbohrungen 44 münden.

Demgegenüber zeigt Figur 8 die Konfiguration der Innenseite 64 der zweiten Axiallagerschale 70. Diese ist im Vergleich zur Konfiguration der Innenseite der ersten Axiallagerschale 68 gemäß der Darstellung in Figur 6 erheblich vereinfacht. In der zweiten Axiallagerschale 70 sind lediglich die Schraublöcher 58, die zu denjenigen der ersten Axiallagerschale 68 fluchten, ausgeführt, sowie die Austrittsbohrungen 44, die an der in Figur 7 dargestellten Außenseite 66 der zweiten Axiallagerschale 70 im Bereich, bevorzugt mittig in den Keilflächen 48 münden. Bezugszeichen 52 in Figur 8 bezeichnet die einen Winkel von ca. 90° überstreichende Aussparung 52, in welche die Öffnung 54 für die Welle 11 übergeht.

Die Aussparung 52 dient - wie vorstehend bereits beschrieben - zur Vereinfachung der Montage des Axiallagers 40 auf dem Umfang einer Welle 11 - wie im Zusammenhang mit Figur 1 dargestellt.

Analog zu den Darstellungen von Innen- und Außenseite der ersten Axiallagerschale 68 gemäß der Figuren 5 und 6 sind in der in den Figuren 7 und 8 dargestellten zweiten Axiallagerschale 70 die Schraublöcher 58 sowie die Austrittsbohrungen 44 vorgesehen, über welche das zugeführte Schmiermittel, vorzugsweise Schmieröl, in einzelnen Rastflächen 46 bzw. Keilflächen 48 im Bereich der Schmiernut 50 zugeführt wird.

In der Darstellung gemäß Figur 7 sind innerhalb der Schmiernut 50 von der Außenseite 66 der zweiten Axiallagerschale 70 in Umfangsrichtung gesehen vier Rastflächen 46 bzw. vier Keilflächen 48 ausgebildet, in die jeweils eine Austrittsbohrung 44 zur Versorgung derselben mit Schmieröl mündet. Abhängig vom Durchmesser der Öffnung 54 für die Welle 11 des Axiallagers 40 in geteilter Ausführung 60 können innerhalb der Schmiernut 50 auch eine größere oder eine geringere Anzahl von mit Schmiermitteln beaufschlagten Rastflächen 46 bzw. Keilflächen 48 ausgeführt werden. Da die Rastflächen 46 bzw. die Keilflächen 48 innerhalb der Schmiernut 50 in Ringform angeordnet sind, ist sichergestellt, dass sich bezogen auf den Umfang der zweiten Axiallagerschale 70 kein Festkörperkontakt der relativ zueinander bewegten Flächen einstellt, und eine reibungsfreie Lagerung der Welle 11 über den gesamten Umfang erreicht werden kann. Da durch die erfindungsgemäß vorgeschlagene Lösung sichergestellt ist, dass zur gleichen Zeit sämtliche Austrittsbohrungen 44 mit Schmieröl versorgt werden können, stellt sich beim Anlauf des Axiallagers schnell eine kontaktfreie Lagerung der Welle 1 ein, da der Bereich, innerhalb dessen Mischreibung vorliegt, verringert ist.

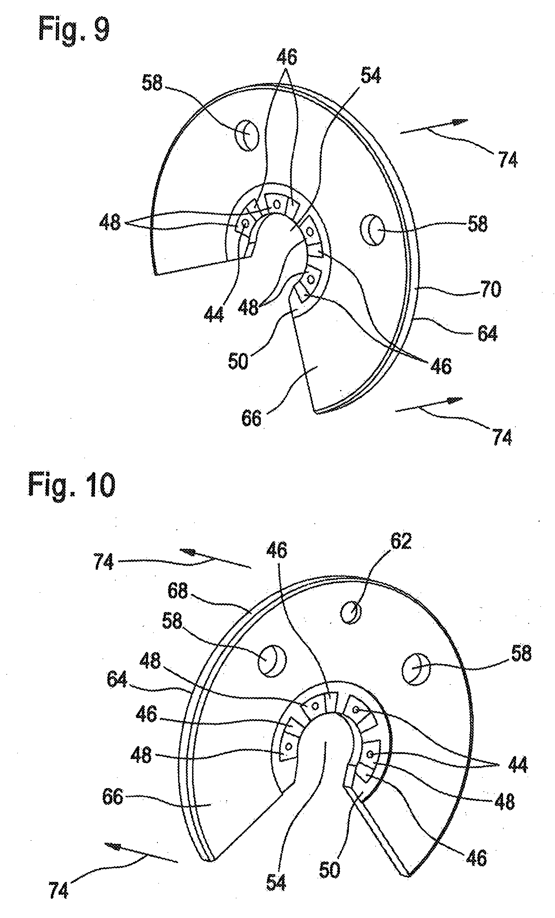

Den Figuren 9 und 10 ist zu entnehmen, dass die erste Axiallagerschale 68 und die zweite Axiallagerschale 70 des in geteilter Ausführung 60 dargestellten Axiallagers 40 in Montagerichtung 54 mit Innenseiten 64 miteinander gefügt werden. Durch das Fügen der Rückseiten der Innenseiten 64 der beiden Axiallagerschalen 68, 70 erfolgt eine Kapselung, d.h. eine Abdichtung des durch den nierenförmig verlaufenden Schmiermittelkanal 32 und die von diesem abzweigenden Stichkanäle 72 dargestellten Hohlraums. Dieser wird über die Durchgangsbohrung 62 zentral mit Schmiermittel beaufschlagt. Durch die Presskraft zwischen den beiden. Axiallagerschalen 68, 70 ist eine Abdichtung des in geteilter Ausführung 60 dargestellten Axiallagers 40, d.h. durch Aneinanderpressen der Axiallagerschalen 68, 70 sichergestellt. Der Darstellung gemäß den Figuren 9 und 10 ist des Weiteren zu entnehmen, dass nach Fügen der beiden Axiallagerschalen 68, 70 in Montagerichtung 74 miteinander die jeweiligen Außenseiten 66 mit den Schmiernuten 50 nach außen weisen. In Abweichung der in den Figuren 9 und 10 dargestellten Ausführungsmöglichkeit der Außenseiten 66 der Axiallagerschalen 68,70 kann auch nur auf einer der Axiallagerschalen 68 oder 70 eine Schmiernut ausgeführt sein, in der sich, in Umfangsrichtung verteilt angeordnet, eine Anzahl von mit Schmiermittel beaufschlagten Rastflächen 46 bzw. Keilflächen 48 befindet.

Wenngleich in Zusammenhang mit den Figuren 5-10 an einem Axiallager 40 dargestellt, welches eine Aussparung 52 zur Erleichterung der Montage an einer Welle 11 aufweist, kann eine geteilte Ausbildung 60 auch an einem in Umfangsrichtung geschlossen ausgeführtten Axiallager 22 (vgl. Figuren 2, 3 und 4) vorgenommen werden. Bei enteiligen, geschlossene Axiallagern 22 wird nicht jede der Keilflächen 48 durch eine eigens zugeordnete Austrittsbohrung 44 mit Schmiermittel gespeist. Oftmals wird sogar nur eine Zuführbohrung 34 in vertikaler Anordnung bzw. nur eine Austrittsbohrung 44 eingesetzt, und das Schmiermittel über die Fliehkraft auf die vorgesehenen Keilflächen 48 verteilt. Mit einer erfindungsgemäß vorgeschlagenen Ausführungsform in geteilter Ausführung 60 kann im Gegensatz zu einer geschlossenen Ausführung des Axiallagers 22 jede der Keilflächen 48 mit geringem Aufwand mit Schmiermittel versorgt werden.

## Patentansprüche

1. Axiallager (22, 40) zur Lagerung einer Welle (11) in einem Gehäuseteil (12), welches über einen Anschluss (24) mit einem Schmiermittel beaufschlagt ist, das schmiermittelbeaufschlagte Flächen (46, 48) des Axiallagers (22, 40) versorgt,
- wobei das Axiallager (22, 40) in geteilter Schalenausführung (60) ausgeführt ist, derart, dass eine erste und eine zweite Axiallagerschale (68, 70) zusammen das Axiallager (22, 40) bilden,
- wobei das Axiallager (22,40) eine erste sowie eine zweite Außenseite aufweist, und
- wobei an mindestens einer Axiallagerschale (68, 70) innenliegend mindestens ein Schmiermittelkanal (32, 72) verläuft,
**dadurch gekennzeichnet,**
- **dass** die gesamte erste Außenseite des Axiallagers (22, 40) von einer von der zweiten Axiallagerschale (70) abgewandte Seite der ersten Lagerschale (68) gebildet ist, und
- **dass** die gesamte zweite Außenseite des Axiallagers (22, 40) von einer von der ersten Axiallagerschale (68) abgewandten Seite der zweiten Lagerschale (70) gebildet ist.

2. Axiallager (22, 40) gemäß Anspruch 1, **dadurch gekennzeichnet, dass** die Axiallagerschalen (68, 70) mit ihren Innenseiten (64) einen mit Schmiermittel beaufschlagten Innenraum bilden.

3. Axiallager (22, 40) gemäß Anspruch 1, **dadurch gekennzeichnet, dass** an einer Außenseite (66) mindestens einer der Axiallagerschalen (68, 70) mindestens eine mit Schmiermittel beaufschlagte Rastfläche (46) und/oder Keilfläche (48) ausgeführt ist.

4. Axiallager (22,40) gemäß Anspruch 3, **dadurch gekennzeichnet, dass** die Rastflächen (46) und/oder die Keilflächen (48) innerhalb von Schmiernuten (50) in Ringform angeordnet sind.

5. Axiallager (22, 40) gemäß Anspruch 2, **dadurch gekennzeichnet, dass** der mindestens eine Schmiermittelkanal (32) in einer Innenseite (64) mindestens einer der beiden Axiallagerschalen (68, 70) vertieft eingebracht, insbesondere auch eingeprägt, eingestanzt oder geschmiedet ist.

6. Axiallager (22, 40) gemäß Anspruch 1, **dadurch gekennzeichnet, dass** der Schmiermittelkanal (32) kreissegmentförmig verläuft und von diesem eine Anzahl von Stichkanälen (72) zur Versorgung von Austrittsbohrungen (44) mit Schmiermittel abzweigen.

7. Axiallager (22, 40) gemäß Anspruch 6, **dadurch gekennzeichnet, dass** der mindestens eine Schmiermittelkanal (32) einen bogenförmigen Verlauf aufweist und an der Innenseite (64) einen Winkelbereich (60) zwischen 90° und ≥ 180° überstreicht.

8. Axiallager (22, 40) gemäß Anspruch 1, **dadurch gekennzeichnet, dass** der mindestens eine Schmiermittelkanal (32) an der Innenseite (64) mindestens einer der Axiallagerschalen (68, 70) über mindestens einen zentralen Schmiermittelzulauf (62) mit Schmiermittel versorgt ist.

9. Axiallager (22,40) gemäß Anspruch 3, **dadurch gekennzeichnet, dass** die Rastflächen (46) und/oder die Keilflächen (48) an der Außenseite (66) mindestens einer der Axiallagerschalen (68, 70) über jeweils eine Austrittsbohrung (44) mit dem Schmiermittelkanal (32) verbunden sind.

10. Axiallager (22, 40) gemäß einem der Ansprüche 1 bis 8, **dadurch gekennzeichnet, dass** die axiale Dicke des Axiallagers (22, 40) durch die axialen Dicken er beiden Axiallagerschalen (68, 70) definiert ist.

11. Verwendung eines Axiallagers (22, 40) gemäß einem oder mehrere der Ansprüche 1-10 in einer Aufladeeinrichtung (10), insbesondere in einem Abgasturbolader.

## Claims

1. Axial bearing (22, 40) for supporting a shaft (11) in a housing part (12), which is charged with a lubricant via a connection (24) which supplies lubricant-charged surfaces (46, 48) of the axial bearing (22, 40),
- wherein the axial bearing (22, 40) is designed to have a divided shell structure (60), such that a first and a second axial bearing shell (68, 70) together form the axial bearing (22, 40),
- wherein the axial bearing (22, 40) comprises a first and a second outer side and
- wherein on at least one axial bearing shell (68, 70) at least one lubricant channel (32, 72) runs internally,
**characterised in that**
- the entire first outer side of the axial bearing (22, 40) is formed by a side of the first bearing shell (68) facing away from the second axial bearing shell (70), and
- the entire second outer side of the axial bearing (22, 40) is formed by a side of the second bearing shell (70) facing away from the first axial bearing shell (68).

2. Axial bearing (22, 40) according to claim 1, **characterised in that** the axial bearing shells (68, 70) with their inner sides (64) form an inner chamber charged with lubricant.

3. Axial bearing (22, 40) according to claim 1, **characterised in that** on an outer side (66) of at least one of the axial bearing shells (68, 70) at least one engaging surface (46) and/or wedge surface (48) charged with lubricant is formed.

4. Axial bearing (22, 40) according to claim 3, **characterised in that** the engaging surfaces (46) and/or the wedge surfaces (48) are arranged inside lubricating grooves (50) in annular form.

5. Axial bearing (22, 40) according to claim 2, **characterised in that** the at least one lubricant channel (32) is recessed, in particular also imprinted, stamped or forged, in an inner side (64) of at least one of the two axial bearing shells (68, 70).

6. Axial bearing (22, 40) according to claim 1, **characterised in that** the lubricant channel (32) runs in the form of a circular segment and from the latter a number of branch channels (72) branch off for supplying outlet bores (44) with lubricant.

7. Axial bearing (22, 40) according to claim 6, **characterised in that** the at least one lubricant channel (32) has a curved shape and on the inner side (64) coats and angular area (60) of between 90° and ≥ 180°.

8. Axial bearing (22, 40) according to claim 1, **characterised in that** the at least one lubricant channel (32) on the inner side (64) of at least one of the axial bearing shells (68, 70) is supplied with lubricant via at least one central lubricant inflow (62).

9. Axial bearing (22, 40) according to claim 3, **characterised in that** the engaging surfaces (46) and/or the wedge surfaces (48) on the outside (66) of at least one of the axial bearing shells (68, 70) are each connected by an outlet bore (44) to the lubricant channel (32).

10. Axial bearing (22, 40) according to any one of claims 1 to 8, **characterised in that** the axial thickness of the axial bearing (22, 40) is defined by the axial thicknesses of the two axial bearing shells (68, 70).

11. Use of an axial bearing (22, 40) according to one or more of claims 1-10 in a charging device (10), in particular in a waste gas turbocharger.

## Revendications

1. Palier axial (22, 40) servant à supporter un arbre (11) dans une partie de carter (12), qui est soumise à l'action d'un agent lubrifiant par l'intermédiaire d'un raccord (24), qui approvisionne des surfaces (46, 48), soumises à l'action d'un agent lubrifiant, du palier axial (22,40),
- le palier axial (22, 40) étant réalisé selon une version à coques (60) divisée de telle manière qu'une première et une deuxième coque de palier axial (68, 70) forment ensemble le palier axial (22,40),
- le palier axial (22, 40) présentant un premier ainsi qu'un deuxième côté extérieur, et
- au moins un canal d'agent lubrifiant (32, 72) s'étendant côté intérieur au niveau au moins d'une coque de palier axial (68, 70),
**caractérisé en ce**
- **que** l'ensemble du premier côté extérieur du palier axial (22, 40) est formé par un côté, opposé à la deuxième coque de palier axial (70), de la première coque de palier (68), et
- **que** l'ensemble du deuxième côté extérieur du palier axial (22, 40) est formé par un côté, opposé à la première coque de palier axial (68), de la deuxième coque de palier (70).

2. Palier axial (22, 40) selon la revendication 1, **caractérisé en ce que** les coques de palier axial (68, 70) forment, par leurs côtés intérieurs (64), un espace intérieur soumis à l'action d'un agent lubrifiant.

3. Palier axial (22, 40) selon la revendication 1, **caractérisé en ce qu'**au moins une surface d'enclenchement (46) et/ou une surface à clavette (48) soumises à l'action d'un agent lubrifiant sont réalisées au niveau d'un côté extérieur (66) au moins d'une des coques de palier axial (68, 70).

4. Palier axial (22, 40) selon la revendication 3, **caractérisé en ce que** les surfaces d'enclenchement (46) et/ou les surfaces à clavette (48) sont disposées selon une forme annulaire à l'intérieur de rainures de lubrification (50).

5. Palier axial (22, 40) selon la revendication 2, **caractérisé en ce que** le canal d'agent lubrifiant (32) au moins au nombre de un est pratiqué, en particulier est estampé, découpé ou forgé, dans un côté intérieur (64) au moins d'une des deux coques de palier axial (68, 70).

6. Palier axial (22, 40) selon la revendication 1, **caractérisé en ce que** le canal d'agent lubrifiant (32) s'étend de manière à présenter une forme de segment circulaire et un nombre donné de canaux de garage (72) servant à approvisionner des alésages de sortie (44) en agent lubrifiant forment un embranchement par rapport au canal d'agent lubrifiant.

7. Palier axial (22, 40) selon la revendication 6, **caractérisé en ce que** le canal d'agent lubrifiant (32) au moins au nombre de un présente un profil en formé d'arc et balaye une plage angulaire (60) entre 90° et ≥180° au niveau du côté intérieur (64).

8. Palier axial (22, 40) selon la revendication 1, **caractérisé en ce que** le canal d'agent lubrifiant (32) au moins au nombre de un est alimenté en agent lubrifiant par l'intermédiaire au moins d'une arrivée d'agent lubrifiant (62) centrale au niveau du côté intérieur (64) au moins d'une des deux coques de palier axial (68, 70).

9. Palier axial (22, 40) selon la revendication 3, **caractérisé en ce que** les surfaces d'enclenchement (46) et/ou les surfaces à clavette (48) sont reliées au niveau du côté extérieur (66) au moins d'une des coques de palier axial (68, 70) au canal d'agent lubrifiant (32) par l'intermédiaire de respectivement un alésage de sortie (44).

10. Palier axial (22, 40) selon l'une quelconque des revendications 1 à 8, **caractérisé en ce que** l'épaisseur axiale du palier axial (22, 40) est définie par les épaisseurs axiales des deux coques de palier axial (68, 70).

11. Utilisation d'un palier axial (22, 40) selon l'une quelconque ou plusieurs des revendications 1 à 10 dans un dispositif de charge (10), en particulier dans une turbosoufflante à gaz d'échappement.
